# EUROPEAN PATENT SPECIFICATION

(11) **EP 0 682 322 B1**
(45) Date of publication and mention of the grant of the patent: **26.09.2001**
(21) Application number: 95201431.4
(22) Date of filing: 02.07.1992
(51) Int. Cl.: G06K 19/077

(54) **An IC card**
IC-Karte
Carte à puce

(30) Priority: 09.09.1991 US 756940
(43) Date of publication of application: 15.11.1995
(62) Divisional of application: 92306142.8
(73) Proprietor: ITT MANUFACTURING ENTERPRISES, INC., Wilmington, Delaware 19801 (US)
(72) Inventor: Perkins, Carl Curtiss, Irvine, CA 92714 (US)
(74) Representative: Ertl, Nicholas Justin

(56) References cited:
- EP-A- 0 417 648
- US-A- 3 200 361
- US-A- 4 146 291
- US-A- 4 872 091

## Description

The present invention relates to IC cards and relates more specifically to such cards having grounding arrangements.

This disclosure is a divisional of our European Patent Application Number 92306142.8.

Memory cards are commonly constructed with a moulded plastic body having opposite sides and ends, a combination circuit board and connector that is installed in the body, and top and bottom metallic covers installed at the top and bottom of the body. Such memory cards are especially useful in electronic equipment or devices of very small thickness, such as laptop computers that may have a width and length of 8 1/2 inches by 11 inches, and a thickness of much less than one inch. Standard JEIDA cards have a thickness, or height, of 3.3 or five millimetres, which enables them to be inserted into thin slots of the electronic device.

An IC card according to the preamble of claim 1 is described in Elektronik, volume 37, number 9, 19th August 1988 at pages 42 to 43. JP-A-02 239 699, of which there is an English-language abstract in Patent Abstracts of Japan, volume 14, number 557, (E-1011) 21/09/90, describes a printed circuit board with high-frequency shielding provided by shielding covers attached by collars to ground planes at the periphery of the circuit board.

European Patent Application Number 0417648A3 discloses an IC card which comprises a cover formed by a metal panel having resilient projections and a frame formed of synthetic resin having recesses corresponding to the resilient projections. The cover is mounted on the frame by engaging the projections with respective recesses to secure the cover on the frame. The arrangement provides a degree of shielding of the card against electromagnetic interference. The present invention seeks to provide an improved construction.

In accordance with the present invention there is provided an IC card with a frame having laterally spaced opposite sides and longitudinally spaced front and rear ends and including a body having laterally spaced side beams, the frame having first and second conductive covers each of which has a peripheral cover portion, with one of the covers being a top cover that lies over the body and the other cover being a bottom cover that lies under the body, the body side beams being sandwiched between the cover peripheral portions, a circuit board assembly, mounted to the body, including a board having a ground plane and at least one circuit component mounted on the board and characterized in that the board has a peripheral board portion and the ground plane includes a peripheral ground plane portion lying at the board peripheral portion, and in that the body side beams have conductive surface portions, extending substantially along the length of the beams, which conductive surface portions are electrically connected to the covers and the peripheral ground plane portion.

In accordance with one embodiment of the present invention, an IC (integrated circuit) memory card is provided which enables grounding of the card during its insertion into a slot of an electronic device. The card has a frame that includes a moulded body with opposite sides and forward and rearward ends, which holds a circuit board assembly having a ground plane and which holds a connector connected to the circuit board. The frame has an electrically conductive region connected to the ground plane of the circuit board.

The body of the card frame can be moulded of electrically conductive material. The electrically conductive body provides good EMI (electromagnetic interference) shielding for the card (in conjunction with conductive top and bottom covers of the frame).

By way of example the present invention will be best understood from the following description of embodiments thereof when read in conjunction with the accompanying drawings, in which:-
Figure 1 is an isometric view of an IC memory card according to the present invention and an electronic device in the form of a laptop computer;
Figure 2 is a sectional top view of the memory card and a portion of the electronic device of Figure 1;
Figure 3 is an exploded isometric view of the memory card of Figure 2;
Figure 4 is an isometric view of just the body of the frame of the memory card of Figure 3;
Figure 5 is a partial sectional view of a memory card taken on the line 5 - 5 of Figure 2; and
Figure 6 is a side view of a combination of connector and circuit board assembly of the card of Figure 3.

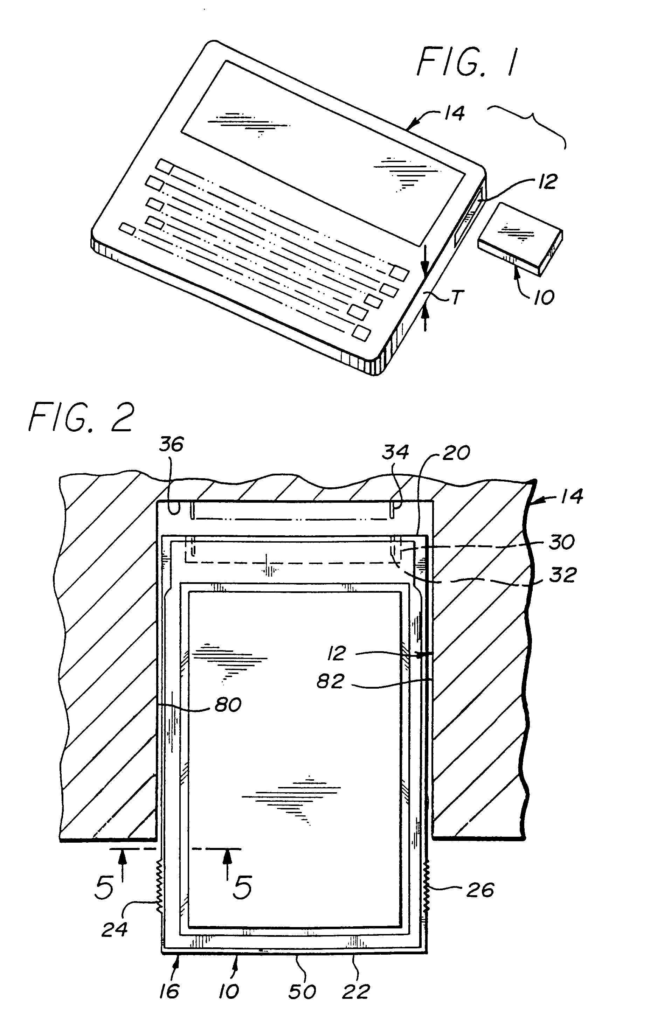

Referring now to the drawings, Figure 1 illustrates an IC (integrated circuit) memory card 10 of the present invention that is adapted to be inserted into a slot 12 of an electronic device 14, the particular device shown being a laptop computer. One style of electronic computer has a width and length of 8.5 inches and 11 inches respectively and a thickness T that is as small as possible, preferably a small fraction of an inch. Such a laptop computer can be carried around in space designed to be occupied by ordinary sheets of paper or booklets. One source of concern in using memory cards, is that the card may have a considerable static electric charge, which must be dissipated prior to full insertion of the card into the device, to avoid damage to components in the electronic device.

Figure 2 shows the memory card 10 as it is being inserted into the slot 12 of the device 14. The memory card includes a frame 16 with forward and rearward ends 20, 22 and opposite sides 24, 26. A connector 30 is mounted at the forward end of the frame and has multiple socket contacts 32. The electronic device has multiple corresponding pin contacts 34 at the front end 36 of the slot, which fully engage the socket contacts when the card is fully inserted into the slot. The connector 30 has a housing moulded of dielectric material with holes that hold the card contacts 32.

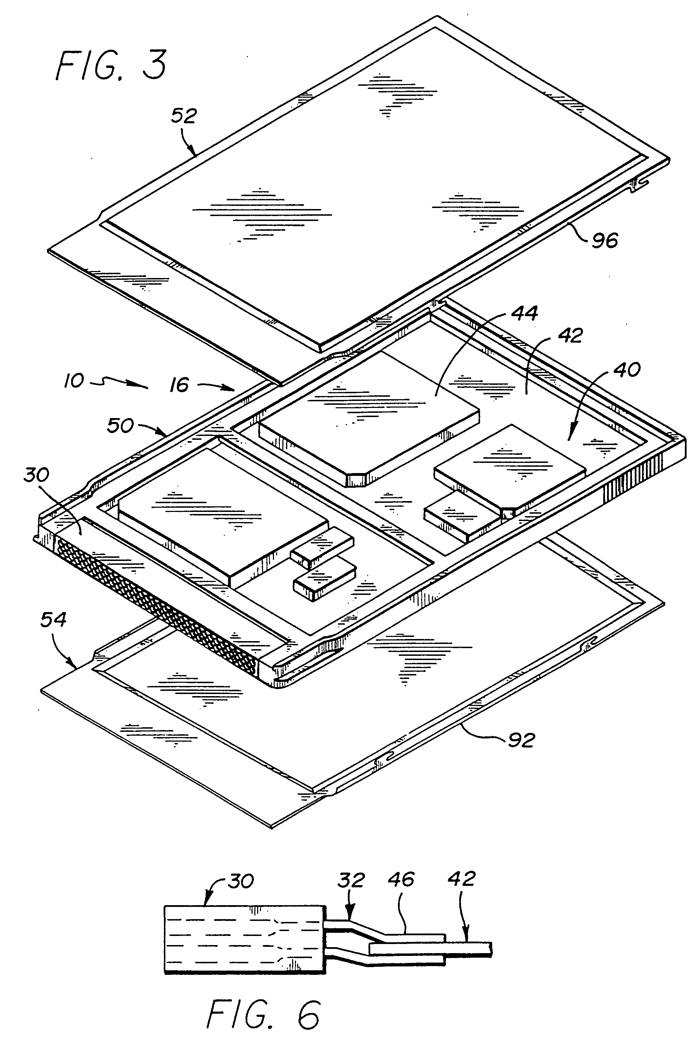

Figure 3 shows details of the memory card 10, which includes the frame 16 and connector 30 that is mounted at the forward end of the frame. A circuit board assembly 40 that is mounted on the frame, includes a circuit board 42 and a plurality of circuit components 44 mounted on the board. Figure 6 illustrates how the rear ends 46 of the connector socket contacts 32 are connected to conductive tracks on the board 42. The frame 16 (Figure 3) includes an injection moulded body 50 and upper and lower electrically conductive covers 52, 54 that can be mounted on the top and bottom of the frame body 50. The card is assembled by first installing the combination circuit board assembly 40 and connector 30 on the body 50. Then the upper and lower covers 52,54 are attached to opposite faces of the body.

Figure 4 illustrates details of the moulded body 50. The body includes a pair of side beams 60, 62 forming the opposite sides or side edges 24, 26 of the card, and a rear beam 64 forming the rear end 22 of the card. The body also includes a pair of cross beams 66, 68 which strengthen the body.

In accordance with the present invention, the injection moulded body 50 is formed of injection moulded plastic material which is electrically conductive. A variety of plastic conductive materials are known, which often include multiple particles or fibres of conductive material, such as silver, embedded in a dielectric plastic material such as a polyester. Although the electrical resistivity of moulded plastic material is much higher than that of some metals such as silver and copper, often having a bulk resistivity that is about two orders of magnitude greater than that of copper (whose electrical resistivity is 1.7 microhm-centimetre) the resistivity of such conductive plastic material is moderate and they are considered to be electrically conductive (their resistivities are less than four orders of magnitude greater than that of copper). The use of an electrically conductive body results in important advantages for the memory card. One advantage is that the conductive side and rear beams provide protection against EMI (electromagnetic interference) that might otherwise pass between the metal upper and lower covers 50, 54 of the frame. The circuitry in highly compact electronic devices, such as laptop computers, is typically very close together and it is important to minimise electromagnetic interference between components in the card and those in the electronic device.

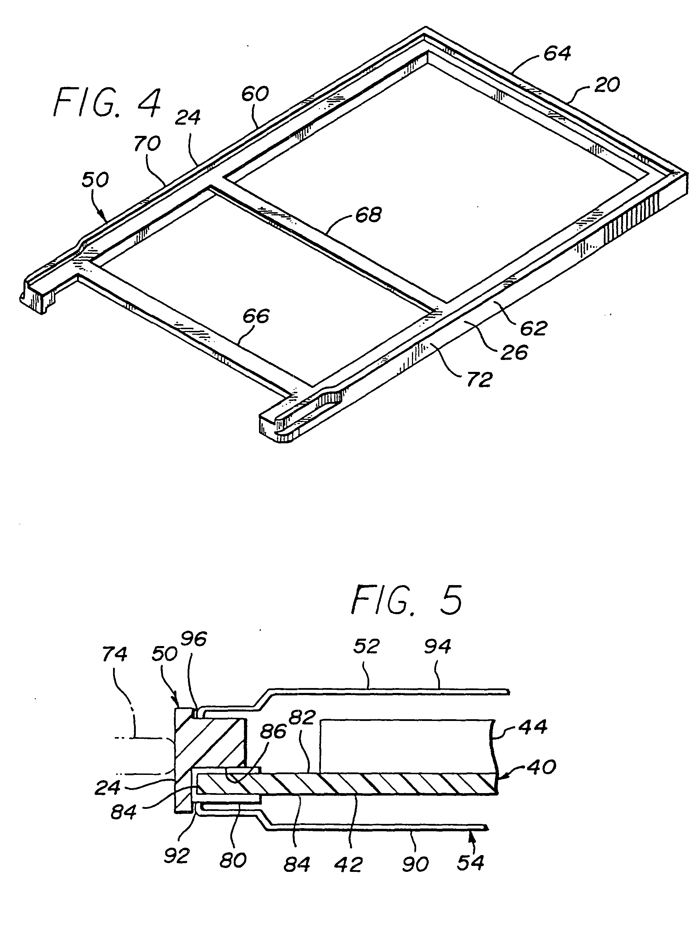

Figure 5 illustrates some details of the connection of the circuit board assembly 40 and the electrically conductive body 50 of the frame. The circuit board 42 of the assembly includes a ground plane 80 of electrically conductive material such as foil, which is connected to grounded locations on the electronic components on the board. The ground plane lies on the opposite faces 82, 84 of the board adjacent to the edges 84 of the board. When the card is assembled as shown in Figure 5, the ground plane 80 lies facewise against a surface 86 of the frame body 50, to ground the body 50. The bottom cover 54 has a horizontally-extending face 90 and has an edge portion 92 that is bent to extend largely vertically. The edge of the edge portion bears against the ground plane at 80, to ensure that the lower cover 54 is maintained at the same potential as the ground plane of the circuit board and the conductive body 50. The top cover 52 also has a face 94 and a bent edge portion 96 whose edge contacts the conductive body to keep the upper cover grounded. This construction avoids the need to use springs or the like to connect the top and bottom covers to each other and to the ground plane, and is used in U.S. Patent No. 4,780,791.

Thus, the invention provides a memory card that can be inserted into the slot of an electronic device. The card can include a frame with a body having portions lying along opposite sides and the rear end of the card, with the body formed of electrically conductive material. Forming the body of electrically conductive material has the additional advantage of providing EMI (electromagnetic interference) shielding along most of the edge area of the card.

## Claims

1. An IC card with a frame (16) having laterally spaced opposite sides (24,26) and longitudinally spaced front and rear ends (20,22) and including a body (50) having laterally spaced side beams (60,62), the frame having first and second conductive covers (52,54) each of which has a peripheral cover portion, with one of the covers (52) being a top cover that lies over the body (50) and the other cover (54) being a bottom cover that lies under the body (50), the body side beams (60,62) being sandwiched between the cover peripheral portions, a circuit board assembly (40), mounted to the body (50), including a board (42) having a ground plane (80) and at least one circuit component (44) mounted on the board (42) and **characterized in that** the board (42) has a peripheral board portion and the ground plane (80) includes a peripheral ground plane portion lying at the board peripheral portion, and in that the body side beams (60,62) have conductive surface portions (86), extending substantially along the length of the beams, which conductive surface portions are electrically connected to the covers (52,54) and the peripheral ground plane portion.

2. An IC card as claimed in claim 1, **characterized in that** one of the covers (52) is directly engaged with the conductive surface portions (86) on the beams (60,62).

3. An IC card as claimed in claim 1 or 2, **characterized in that** the body includes cross beams (64,66) extending between the body side beams (60,62), with one cross beam (64) disposed at one end of the body side beams and the other cross beam (66) disposed near the opposite end of the body side beams, and the circuit board assembly (40) is mounted between the cross beams (64,66).

4. An IC card as claimed in any of claims 1 to 3, **characterized in that** the body (50) is molded of electrically conductive material that forms the side beams (60,62).

5. An IC card as claimed in any one of claims 1 to 3, **characterized in that** the body has a conductive surface over substantially its entire extent.

## Patentansprüche

1. Eine IC-Karte mit einem Rahmen (16), der seitlich angeordnete gegenüberliegende Seiten (24, 26) und längsweise angeordnete vordere und rückwärtige Enden (20, 22) hat und einen Körper (50), der seitlich angeordnete seitliche Wangen (60, 62) hat, wobei der Rahmen eine erste und zweite leitfähige Abdeckung (52, 54) hat, die jeweils einen peripheren Teilbereich besitzt, wobei eine Abdeckung (52) eine obere Abdeckung ist, die über dem Körper (50) liegt und die andere Abdeckung (54) eine untere Abdeckung ist, die unter dem Körper (50) liegt, wobei die Seitenwangen (60, 62) des Körpers zwischen den peripheren Teilbereichen der Abdeckung liegen, sowie eine Platinenbaugruppe (40) umfaßt, die am Körper (50) befestigt ist, wobei eine Platine (42) enthalten ist, die eine Erdungsfläche (80) und mindestens ein auf der Platine (42) montiertes Bauelement (44) hat, **dadurch gekennzeichnet,**
**daß** die Platine (42) einen peripheren Platinenbereich hat und daß die Erdungsfläche (80) einen peripheren Teilbereich hat, der am peripheren Platinenbereich liegt und daß die seitlichen Wangen (60, 62) des Körpers leitfähige Oberflächenbereiche (86) haben, die sich im wesentlichen entlang der Länge der Wangen erstrecken, wobei die leitfähigen Oberflächenbereiche mit den Abdeckungen (52, 54) und dem peripheren Teilbereich der Erdungsfläche elektrisch verbunden sind.

2. Eine IC-Karte nach Anspruch 1, **dadurch gekennzeichnet, daß** eine der Abdeckungen (52) direkt mit den leitfähigen Oberflächenbereichen (86) n den Wangen (60, 62) verbunden sind.

3. Eine IC-Karte nach Anspruch 1 oder 2, **dadurch gekennzeichnet, daß** der Körper Querwangen (64,66) aufweist, die sich zwischen den Seitenwangen (60,62) des Körpers erstrecken, wobei eine Querwange (64) an einem Ende der Seitenwangen des Körpers und die andere Querwange (66) am gegenüberliegenden Ende der Seitenwangen des Körpers sich befindet und die Platinenbaugruppe (40) zwischen den Querwangen (64,66) befestigt ist.

4. Eine IC-Karte nach einem der Ansprüche 1 bis 3, **dadurch gekennzeichnet, daß** der Körper (50) aus einem elektrisch leitfähigen Material geformt ist, das die seitlichen Wangen (60, 62) bildet.

5. Eine IC-Karte nach einem der Ansprüche 1 bis 3, **dadurch gekennzeichnet, daß** der Körper eine leitfähige Oberfläche im wesentlichen entlang seiner gesamten Ausdehnung besitzt.

## Revendications

1. Carte à circuits intégrés, comprenant un cadre (16) ayant des côtés opposés (24, 26) écartés dans le sens latéral et une extrémité frontale et une extrémité postérieure (20, 22) écartées dans le sens longitudinal, et comprenant un corps (50) ayant des poutres latérales (60, 62) écartées dans le sens latéral, le cadre comportant une première et une deuxième couverture conductrice (52, 54) ayant chacune une partie de couverture périphérique, l'une des couvertures (52) étant une couverture de dessus qui repose sur le corps (50) et l'autre couverture (54) étant une couverture de dessous qui repose au-dessous du corps (50), les poutres latérales du corps (60, 62) étant prises en sandwich entre les parties périphériques de couverture, un ensemble de plaque à circuits (40), monté sur le corps (50), qui inclut une plaque (42) ayant un plan de masse (80) et au moins un composant à circuits (44) monté sur la plaque (42), **caractérisée en ce que** la plaque (42) comprend une partie de plaque périphérique, et le plan de masse (80) inclut une partie de plan de masse périphérique située au niveau de la partie périphérique de la plaque, et en ce que les poutres latérales du corps (60, 62) ont des parties de surface conductrices (86), qui s'étendent sensiblement le long de la longueur des poutres, lesdites parties de surface conductrices étant électriquement connectées au couvercle (52, 54) et à la partie de plan de masse périphérique.

2. Carte à circuits intégrés selon la revendication 1, **caractérisée en ce que** l'une des couvertures (52) est directement en engagement avec les parties de surface conductrices (86) sur les poutres (60, 62).

3. Carte à circuits imprimés selon l'une ou l'autre des revendications 1 et 2, **caractérisée en ce que** le corps inclut des traverses (64, 66) qui s'étendent entre les poutres latérales du corps (60, 62), une traverse (64) étant disposée à une extrémité des poutres latérales du corps, et l'autre traverse (66) étant disposée à proximité de l'extrémité opposée des poutres latérales du corps, et l'ensemble de plaque à circuits (40) est monté entre les traverses (64, 66).

4. Carte à circuits imprimés selon l'une quelconque des revendications 1 à 3, **caractérisée en ce que** le corps (50) est moulé en un matériau électriquement conducteur qui forme les poutres latérales (60, 62).

5. Carte à circuits imprimés selon l'une quelconque des revendications 1 à 3, **caractérisée en ce que** le corps comprend une surface conductrice sensiblement sur la totalité de son étendue.
